## Europäisches Patentamt
## European Patent Office
## Office européen des brevets

(19)

(11) Numéro de publication: **0 007 121**
**B2**

(12) **NOUVEAU FASCICULE DE BREVET EUROPÉEN**

(45) Date de publication du nouveau fascicule du brevet:
04.01.89

(51) Int. Cl.⁴: **H 01 G 13/02**, H 01 G 13/06

(21) Numéro de dépôt: **79200317.0**

(22) Date de dépôt: **19.06.79**

(54) **Procédé de bobinage de condensateurs.**

(30) Priorité: **07.07.78 FR 7820252**

(43) Date de publication de la demande:
**23.01.80 Bulletin 80/2**

(45) Mention de la délivrance du brevet:
**12.05.82 Bulletin 82/19**

(45) Mention de la decision concernant l'opposition:
**04.01.89 Bulletin 89/1**

(84) Etats contractants désignés:
**DE GB IT**

(56) Documents cité:
**DE-A-890 996**
**DE-A-935 260**
**DE-A-971 395**
**DE-A-1 148 330**
**DE-A-2 008 318**
**GB-A-821 419**

(73) Titulaire: **Metar S.A., Route du Cousimbert 2, CH-1700 Fribourg 5 (CH)**

(72) Inventeur: **Rosenberg, Jean Moise Louis, 83, rue Désirée Richebois, F-94000 Fontenay- sous- Bois (FR)**

(74) Mandataire: **Meylan, Robert Maurice, c/o Bugnion SA Conseils en Propriété Industrielle 10, Route de Florissant Case Postale 375, CH- 1211 Genève 12 - Champel (CH)**

EP 0 007 121 B2

LIBER, STOCKHOLM 1989

**Description**

Procédé de bobinage de condensateurs.

La présence invention est relative à un nouveau procédé de fabrication de condensateurs bobinés.

Un procédé de fabrication connu consiste à bobiner des films conducteurs et des films isolants, ou des films métallisés d'un côté, sur une broche cylindrique puis à extraire la broche à la fin du bobinage.

Lors du retrait de la broche le frottement de celle-ci et de la première spire bobinée tend à décaler axialement les premières spires ce qui modifie les caractéristiques du condensateur.

Par ailleurs, le retrait de la broche laisse subsister au centre du condensateur un trou qui normalement devrait être cylindrique mais l'expérience a montré que les premières spires n'étant plus maintenues se déformaient, cette déformation modifiant également les caractéristiques du condensateur.

Dans le Brevet allemand n° 586 903 on a décrit un procédé permettant, après retrait de la broche, d'obtenir un trou central cylindrique et ce à l'aide d'une bande rigide mais malléable repliée sur les extrémités des films et bobinée avec lesdits films.

Hormis le fait qu'une telle insertion est très difficile à réaliser avec des machines automatiques, l'expérience a montré qu'un tel rajout, sans s'opposer au déplacement axial des premières spires lors du retrait de la broche, influençait la stabilité du condensateur de manière intempestive.

De manière analogue, le Brevet allemand DE-C-890 996 divulgue un procédé de bobinage de condensateurs, selon lequel un manchon est formé par solidarisation entre elles de plusieurs spires d'un film en papier, (plus épais que les films métallisés du condensateur), qui est bobiné autour de la broche qui porte le manchon pendant le bobinage du condensateur.

Ce procédé connu n'est automatisable qu'à l'aide d'un équipement assez complexe, et ne donne pas entière satisfaction sur le plan technique.

Selon l'invention, le procédé de fabrication de condensateurs bobinés, du genre comportant le bobinage de films continus métallisés sur un manchon central disposé sur une broche, le manchon lui-même étant formé par bobinage, sur la broche, de plusieurs spires de film et par solidarisation entre elles de ces spires durant leur bobinage, est caractérisé en ce que lesdites spires sont les premières spires formées par le bobinage desdits films continus sur la broche.

De cette façon, le manchon cylindrique et rigide, ainsi réalisé, n'est pas susceptible de subir une modification de forme durant ou après le retrait de la broche.

L'invention sera mieux comprise par la description qui va suivre faite en se référant au dessin annexé à titre d'exemple indicatif seulement, sur lequel:

La figure 1 montre, vue par bout, une ébauche idéale de condensateur;

La figure 2 est une vue analogue montrant la forme des premières spires de l'ébauche du condensateur après le retrait de la broche;

La figure 3 est une vue schématique montrant une machine à bobiner permettant la mise en oeuvre du procédé de l'invention.

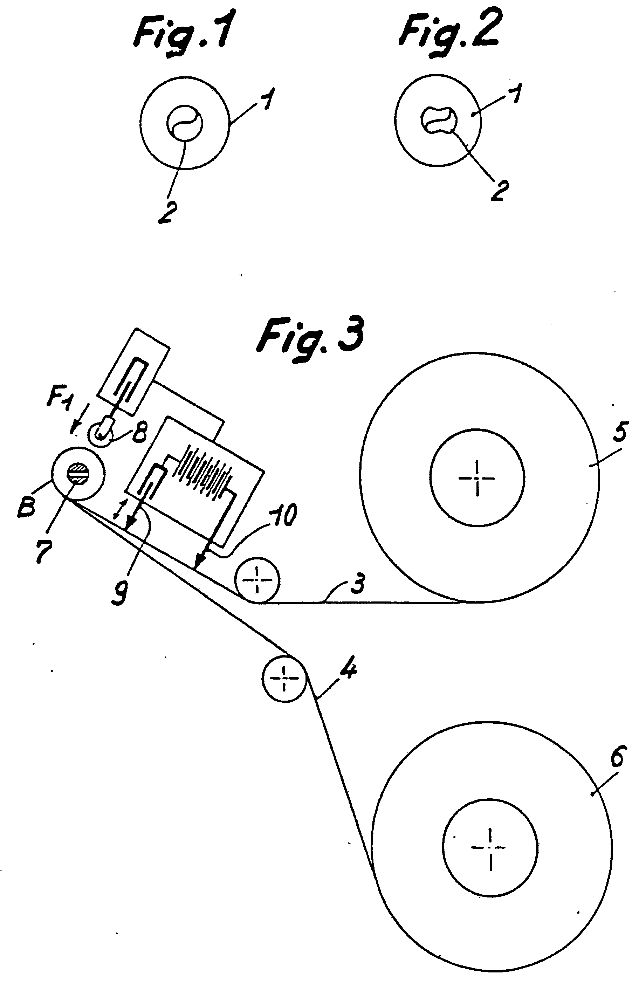

En se reportant au dessin, on voit que la figure 1 montre, vue par bout, une ébauche 1, idéale, c'est-à-dire une ébauche dont les spires centrales 2 sont restées cylindriques. La figure 2, par contre, montre la forme que prennent, en général les spires centrales 2 après le retrait de la broche.

Le procédé de fabrication de l'invention consiste à solidariser entre elles les premières spires pour former un manchon cylindrique rigide et indéformable.

On va maintenant décrire à titre d'exemple et en regard de la figure 3, un moyen permettant la mise en oeuvre du procédé de l'invention.

Les films métallisés usuels 3 et 4 proviennent de bobines 5 et 6 et sont enroulés sur une broche 7, d'un type connu, en deux parties.

Durant l'enroulement des premières spires on solidarise celles-ci entre elles en y appliquant un organe 8 chaud, la chaleur dégagée par l'organe 8 réalisant une fusion partielle des films.

L'organe 8 peut etre déplacé selon une direction qui s'étend radialement par rapport au bobinage B de façon à l'amener en contact avec celui-ci durant le bobinage des premières spires puis à l'écarter ensuite pour permettre le bobinage usuel.

Si on utilise un procédé de bobinage consistant à enrouler d'abord des spires démétallisées on peut utiliser le dispositif de démétalisation pour commander le déplacement de l'organe 8.

Comme montré sur la figure 3, le dispositif de démétallisation est constitué par deux électrodes 9 et 10 appliquées sur l'un des films et entre lesquelles on établit une tension, la démétallisation cessant lors du recul de l'électrode 9.

L'expérience a montré que de bons résultats étaient obtenus en démétallisant une courte longueur de film puis en commandant le déplacement de l'organe 8 selon la flèche F, le recul de ce dernier étant commandé avant celui de l'électrode 9.

De préférence, l'organe 8 est constitué par une résistance électrique mais la solidarisation des premières spires peut être obtenue par d'autres moyens.

Ainsi, on peut concevoir un organe de solidarisation constitué par une roulette moletée appliquée en pression contre le bobinage.

On peut concevoir aussi un organe qui lors de son application contre le bobinage déposerait sur celui-ci une légère couche de solvant de façon à réaliser le collage des spires.

Il faut noter que le procédé de l'invention se distingue des procédés connus uniquement par la modification de la phase initiale d'enroulement: les premières spires enroulées sur le mandrin sont solidarisées entre elles. Naturellement, après cette opération, la fabrication du condensateur est poursuivie de la façon usuelle.

## Revendications

1. Procédé de fabrication de condensateurs bobinés du genre comportant le bobinage de films continus métallisés (3, 4) sur un manchon central disposé sur une broche (7), le manchon lui-même étant formé par bobinage, sur la broche, de plusieurs spires de film et par solidarisation entre elles de ces spires durant leur bobinage, caractérisé en ce que lesdites spires sont les premières spires formées par le bobinage desdits films continus (3, 4) sur la broche (7).

2. Procédé selon la revendication 1, caractérisé par la solidarisation des premières spires à l'aide d'un organe de solidarisation mobile (8), susceptible d'être appliqué contre lesdites premières spires du bobinage.

3. Procédé selon les revendications 1 et 2, caractérisé par l'utilisation d'un organe de solidarisation chaud (8).

4. Procédé selon les revendications 1 et 2, caractérisé par la solidarisation des premières spires en appliquant l'organe de solidarisation (8) en pression contre elles.

5. Procédé selon l'une des revendications 1 et 2, caractérisé en ce que la solidarisation des premières spires s'effectue en déposant sur celles-ci une mince couche de solvant.

6. Procédé selon l'une quelconque des revendications 1 à 5, caractérisé en ce que, préalablement à la solidarisation des premières spires, on démétallise (9, 10) au moins l'un des films.

7. Procédé selon la revendication 6, prise en combinaison avec la revendication 2, caractérisé en ce que le déplacement de l'organe de solidarisation (8) est commandé par le dispositif usel permettant d'effectuer la démétallisation (9, 10).

## Patentansprüche

1. Verfahren zur Herstellung von gewickelten Kondensatoren des Typs, welcher eine auf einer zentralen Hülse (7) aufgebrachte Wicklung von kontinuierlichen, metatllisierten Folien (3, 4) aufweist, wobei die Hülse auf einem Dorn (7) angeordnet ist und selber durch Wickeln mehrerer folienwindungen auf dem Dorn und durch formschlüssiges Verbinden dieser Windungen miteinander während des Wickelns gebildet wird, dadurch gekennzeichnet, daß die erwähnten Windungen die ersten Windungen sind, die durch Wickeln der erwähnten kontinuierlichen Folien (3, 4) auf dem Dorn (7) gebildet werden.

2. Verfahren nach Anspruch 1, dadurch gekennzeichnet, daß die ersten Windungen mit Hilfe eines beweglichen Geräts (8) zum formschlüssigen Verbinden, welches an die erwähnten ersten Windungen der Wicklung angelegt werden kann, formschlüssig miteinander verbunden werden.

3. Verfahren nach den Ansprüchen 1 und 2, dadurch gekennzeichnet, daß ein mit Wärme arbeitendes Gerät (8) zum formschlüssigen Verbinden verwendet wird.

4. Verfahren nach den Ansprüchen 1 und 2, dadurch gekennzeichnet, daß die ersten Windungen formschlüssig miteinander verbunden werden, indem das erwähnte Gerät (8) unter Druck gegen diese Windungen gepreßt wird.

5. Verfahren nach einem der Ansprüche 1 und 2, dadurch gekennzeichnet, daß die ersten Windungen formschlüssig miteinander verbunden werden, indem eine dünne Lösungsmittelschicht auf dieselben aufgebracht wird.

6. Verfahren nach einem der Ansprüche 1 bis 5, dadurch gekennzeichnet, daß vor dem formschlüssigen Verbinden der ersten Windungen wenigstens eine der Folien entmetallisiert (9, 10) wird.

7. Verfahren nach Anspruch 6, in Verbindung mit dem Anspruch 2, dadurch gekennzeichnet, daß die Bewegung des Geräts (8) zum formschlüssigen Verbinden durch die übliche Vorrichtung für die Entmetallisierung gesteuert wird.

## Claims

1. Process for the manufacture of wound capacitors of the type comprising the winding of continuous metallized films (3, 4) over a central sleeve disposed on a spindle (7), the sleeve itself being formed by winding over the spindle a plurality of turns of film and by fastening these turns together while they are being wound, characterized in that said turns are the first turns formed by the winding of said continuous films (3, 4) over the spindle (7).

2. Process according to Claim 1, characterized by the fastening of the first turns with the aid of a movable fastening member (8) adapted to be applied against said first turns of the winding.

3. Process according to Claims 1 and 2, characterized by the use of a hot fastening member (8).

4. Process according to Claims 1 and 2, characterized by the fastening of the first turns by applying the fastening member (8) under pressure against them.

5. Process according to one of Claims 1 and 2, characterized in that the fastening of the first turns is effected by depositing on them a thin coating of solvent.

6. Process according to any one of Claims 1 to 5, characterized in that at least one of the films is demetallized (9, 10) before the fastening of the first turns.

7. Process according to Claim 6 taken in combination with Claim 2, characterized in that the movement of the fastening member (8) is controlled by the usual device enabling demetallization (9, 10) to be effected.

# Fig.1

# Fig.2

# Fig.3